**Europäisches Patentamt**

**European Patent Office**

**Office européen des brevets**

(11) Veröffentlichungsnummer: **0 250 057**
**A2**

# (12) EUROPÄISCHE PATENTANMELDUNG

(21) Anmeldenummer: **87201213.3**

(22) Anmeldetag: **19.06.87**

(51) Int. Cl.4: **C08L 23/02** , **C08L 53/02**

(30) Priorität: **20.06.86 DE 3620690**

(43) Veröffentlichungstag der Anmeldung:
**23.12.87 Patentblatt 87/52**

(84) Benannte Vertragsstaaten:
**ES GR**

(71) Anmelder: **DS-Chemie GmbH & Co. KG**
**Cuxhavener Strasse 42-44**
**D-2800 Bremen(DE)**

(72) Erfinder: **Peifer,Horst H.**
**Viehreihe 42**
**D-2804 Lilienthal(DE)**
Erfinder: **Grundschöttel,Dieter**
**Schaphuser Dorfstrasse 30**
**D-2806 Oyten(DE)**
Erfinder: **Nüssen, Peter**
**Buchenhügel 30**
**D-2863 Ritterhude-Ihlpohl(DE)**

(74) Vertreter: **Eisenführ & Speiser**
**Martinistrasse 24**
**D-2800 Bremen 1(DE)**

(54) **Formteil.**

(57) Die Erfindung betrifft ein Formteil, insbesondere Dichtungselement, für mechanisch dichtende Flaschen-und Gläserverschlüsse aus Metall oder Kunststoff, bestehend aus einem unter üblichen Verwendungsbedingungen elastisch verformbaren synthetischen halogenfreien Polymercompound, mit einem Gehalt an Styrol-Butadien-Styrol-Kautschuk (SBS-Kautschuk) und einem Gehalt an einem estergruppenfreien Härtemodifikator, wobei die Shore A-Härte des Polymercompounds zwischen 30 und 80 liegt. Das Polymercompound hat außerdem einen Gehalt an einem aliphatischen Polymer, insbesondere Polyethylen und/oder Ethylen-Vinylacetat-Copolymer. Das Polymercompound eignet sich insbesondere als Inneneinlage für Gefäßverschlüsse wie Kronenkorke und Schraubkappen.

EP 0 250 057 A2

## Formteil

Die Erfindung betrifft ein Formteil, insbesondere ein Dichtungselement für Gefäßverschlüsse, aus einem unter üblichen Verwendungsbedingungen elastisch verformbaren synthetischen Polymercompound, das gegebenenfalls einen Gehalt an Füllstoff aufweist. Die Erfindung betrifft weiterhin ein Polymercompound zur Herstellung von Formteilen, insbesondere von Dichtungselementen für Gefäßverschlüsse, das plastisch, insbesondere thermoplastisch, zum Formteil ausformbar, aber ·unter dessen üblichen Verwendungsbedingungen elastisch ist und ein synthetisches Polymer, einen Härtemodifikator, sowie gegebenenfalls Schäummittel und/oder Füllstoff bzw. Verarbeitungs-Hilfsmittel enthält. Außerdem betrifft die Erfindung einen Gefäßverschluß, insbesondere Kronenkork bzw. Flaschenschraubverschluß, mit einer Inneneinlage aus elastischem Polymermaterial.

Gefäßverschlüsse müssen sich dafür eignen, einfach und trotzdem zuverlässig dichtend am Gefäß angebracht zu werden, wobei üblicherweise keine Nachbehandlungen erforderlich sein dürfen und die Abmessungen der Gefäßöffnung sowie deren Erhaltungszustand und Rauheit (beispielsweise bei Pfandflaschen) sehr verschieden sein können. Es ist daher schon seit langem bekannt, Gefäßverschlüsse wie beispielsweise Kronenkorke auf ihrer dem Gefäß zugewandten Innenseite mit einem elastischen Dichtungselement zu versehen, welches bei angebrachtem Verschluß zwischen diesem und dem Gefäß eingepreßt ist und die Dichtigkeit gewährleistet.

Während früher die Einlagen von Kronenkorken bzw. Falschenschraubverschlüssen vorwiegend aus Preßkork hergestellt wurden, welcher gegebenenfalls noch mit einer dünnen Kunststoff-oder Aluminiumfolie beschichtet war, wird seit längerem das Dichtungselement insgesamt aus synthetischem Polymercompound hergestellt. Dafür eignen sich jedoch nur Polymercompounds, die dauerhaft und widerstandsfähig genug sind und dabei gleichzeitig die erforderliche Elastizität aufweisen.

In der Praxis wird dafür hauptsächlich PVC verwendet; auch Polyethylen sowie Gemische dieser Stoffe mit Vinylacetat bzw. Vinylacetat-Ethylen-Copolymeren sind eingesetzt worden.

Die Herstellung von Gefäßverschlüssen unter der Verwendung solcher Polymercompounds ist beispielsweise in der DE-AS 20 33 064 und der DE-OS 30 21 488 beschrieben.

Diese bekannten Polymercompounds haben jedoch noch erhebliche Nachteile. Die Verwendung von PVC oder anderen halogenhaltigen Kunststoffen führt zu immer größer werdenden Schwierigkeiten bei der Beseitigung und Unschädlichmachung der gebrauchten, in den Hausmüll gelangenden Gefäßverschlüsse. Bei der üblichen Verbrennungsbehandlung des Hausmülls entstehen aus Halogen-Kunststoffen säurehaltige Gase, deren Freisetzung in die Umwelt schädlich ist. Auch die für die Einstellung der benötigten Dichtungseigenschaften unerläßliche Zusetzung von niedermolekularen Weichmachern (beispielsweise Phthalaten) ·ist, aus Gründen der Gesundheitsfürsorge, nicht unbedenklich, da diese Weichmacher zum Teil aus dem PVC wieder freigegeben werden und über im Gefäß enthaltene Nahrungs-bzw. Genußmittel in den menschlichen Körper gelangen können. Aus diesem Grund ist der Weichmacheranteil solcher Polymermaterialien durch entsprechende Vorschrift nach oben begrenzt.

Polyethylen alleine ist als Dichtungsmaterial insbesondere dann ungeeignet, wenn Temperaturschwankungen oder beschädigte Gefäßmündungen zu berücksichtigen sind. Polyethylen ist außerdem für $CO_2$ -haltige Getränke aus Dichtigkeitsgründen nicht geeignet.

Aufgabe der Erfindung ist es daher, ein Formteil, ein Polymercompound zu seiner Herstellung und einen damit ausgestatteten Gefäßverschluß der eingangs genannten Art anzugeben, die bei unaufwendiger Herstellung die notwendige Dichtigkeit des Gefäßverschlusses gewährleisten, keine - schädlichen Substanzen, insbesondere keine halogenhaltigen Bestandteile und keine niedermolekularen estergruppenhaltigen Weichmacher enthalten und den Beanspruchungsbedingungen üblicher Gefäßverschlüsse, beispielsweise einem Pasteurisiervorgang, standhalten können.

Zur Lösung dieser Aufgabe weist das Formteil der eingangs genannten Art erfindungsgemäß die Merkmale des Patentanspruches 1 auf, während das eingangs genannte Polymercompound mit den im Patentanspruch 9 genannten Merkmalen versehen ist, und der eingangs genannte Gefäßverschluß die Merkmale des Patentanspruches 13 aufweist.

Vorteilhafte Ausgestaltungen sind in den Unteransprüchen definiert.

Das erfindungsgemäße Polymercompound läßt sich aus leicht erhältlichen Rohmaterialien herstellen. Es läßt sich mittels der bereits für die Verarbeitung von vergleichbaren PVC-Materialien vorhandenen z. B. von der Firma SACMI, Italien, hergestellten Maschinen verarbeiten. Dabei erweist sich der Zusatz eines Schummittels als vorteilhaft, welches beim Austritt der Polymermasse aus dem Extruder eine gewisse Strangaufweitung bewirkt, die dem Verhalten von PVC-Massen unter gleichen Bedingungen weitgehend entspricht. Zur Verbesserung des Schneide-und Transportverhaltens des Polymercompounds kann vorteilhaft ein geringer Gehalt an hochdisperser Kieselsäure vorgesehen werden. Das plastifizierte Polymercompound läßt sich ohne Schwierigkeiten extrudieren, schneiden und nachfolgend druckverformen. Es erstarrt dann zu dem gewünschten Formteil.

Dieses aus dem Polymercompound erzeugte, entweder am Gefäßverschluß haftende oder in diesen eingelegte Formteil weist bei guter Formstabilität eine Elastizität auf, die für alle üblichen Einsatzzwecke von Gefäßverschlüssen zur Gewährleistung der Dichtigkeit ausreicht. Die Gefäße sind mit aufgesetztem Verschluß pasteurisierbar, ohne daß das dichtende Formteil leidet oder undicht wird.

. Da das Polymercompound keine niedermolekularen Weichmacher enthält, ist es lebensmittelrechtlich unbedenklich; wenn es in den Hausmüll gerät, kann es in einer Müllverbrennungsanlage keine schädlichen sauren Gase freisetzen, daß es halogenfrei ist.

Die erfindungsgemäßen Gefäßverschlüsse entsprechen den Vorschriften, wie sie beispielsweise in der DIN-Norm 6099 für Kronenkorke festgelegt sind.

Es versteht sich, daß das erfindungsgemäße Polymercompound auf die jeweils gegebenen Anforderungen ver-schiedener Einsatzzwecke dadurch eingerichtet werden kann, daß seine Zusammensetzung entsprechend gewählt wird. So läßt sich die Elastizität über den Gesamtanteil an Zusatzstoffen beeinflussen, die die Ausgangshärte des verwendeten SBS modifizieren. Auch der Anteil an Schäummittel und der Grad der dadurch bewirkten Aufschäumung gestattet eine Anpassung der Materialeigenschaften.

Die Verwendung des erfindungsgemäßen Polymercompounds hat den weiteren Vorteil, daß die erzeugten Formteile leichter sein können als bekannte Dichtungselemente beispielsweise aus PVC. Mit dem erfindungsgemäßen Polymercompound lassen sich daher z. B. Inneneinlagen für Kronenkorke erzeugen, die nur etwa 150 bis 160 mg wiegen; dies bedeutet eine nicht unerhebliche Materialeinsparung gegenüber bekannten Inneneinlagen aus PVC.

Insbesondere für mechanisch dichtende Flaschen-und Gefäßverschlüsse aus Metall bzw. Kunststoff wie etwa Kronenkorke und Schraubkappen ist es erforderlich, daß das die Einlage bildende Dichtungselement fest und vollflächig am Verschluß haftet. Anderenfalls kann es bei beschädigten Gefäßmündungen zum Verschieben oder Verdrehen der Einlage und dadurch zu Undichtigkeiten kommen. Bei schlechter Haftung der Einlage kommt es außerdem durch lokale Ablösungen zu feuchtigkeitsgefüllten Blasen, die die Korrosion metallener Verschlüsse begünstigen. Diese nachteiligen Effekte werden durch den PE- bzw. EVA-Gehalt des Compounds wirksam unterdrückt.

Die Verwendung von PE-und/oder EVA-haltigen Compounds hat den Vorteil, daß Gehalte an aromatischen Polymeren im Compound verringert bzw. ganz vermieden werden. Styrolderivate, die gelegentlich in ähnlichen Compounds enthalten sind, können Geruch und Geschmack des verpackten Produktes nachteilig beeinflussen.

Eine geringere Konzentration aromatischer Polymere erhöht die Verarbeitungssicherheit, besonders bei höheren Temperaturen, indem das Auftreten von unerwünschten Monomeren bzw. Abbauprodukten zurückgedrängt wird.

Für die Abfüllung von karbonisierten Flüssigkeiten erscheint es zukünftig erforderlich, daß das Dichtungselement eine Sicherheitsventil-Funktion ausübt, d.h. bei einem bestimmten Überdruck ein Entweichen des Gases gestattet um ein Platzen des Gefäßes zu vermeiden. Dies wird durch die plastischen Eigenschaften PE-haltiger erfindungsgemäßer Compounds ermöglicht.

Im folgenden wird die Erfindung anhand eines Ausüfhrungsbeispieles weiter verdeutlicht, welches eine Inneneinlage für einen Kronenkork betrifft.

Hierfür wird zunächst durch Vermischen von Styrol-Butadien-Styrol-Kautschuk (SBS-Kautschuk) mit einem im wesentlichen paraffinischen Weißöl gemäß DAB 8 und Zuschlägen von Polyethylen (PE), Ethylen-Vinylacetat-Copolymerem (EVA)sowie ggf. Vinylacetat-Ethylen-Copolymerem (VAE) und/oder Polystyrol ein Polymercompound hergestellt. Dabei bildet der SBS-Kautschuk, der für sich eine Shore A-Härte von zwischen 40 und 90 aufweist, den Haptbestandteil. Der Gehalt an den anderen Polymeren übersteigt 50 Gew.-% des gesamten Polymercompounds nicht und liegt für übliche Kronenkorke niedriger, jedoch vorzugsweise nicht unterhalb von 5 Gew.-%.

Neben diesen Bestandteilen werden dem Polymercompound noch 0,1 % Azodicarbonamid und bis zu 1 Gew.-% hochdisperses $SiO_2$ zugesetzt.

Das so erzeugte Polymercompound wird einer bekannten Maschine zugeführt, wie sie auch zum innenseitigen Beschichten von z. B. Kronenkork-Kapseln mit PVC-haltigen Polymermaterialien dient.

In dieser Maschine gelangt das Polymercompound zunächst in einen Extruder, in dem es unter durchgreifendem Kneten weiter homogenisiert wird. Es verläßt die Austrittsöffnung des Extruders als plastischer Strang, der sogleich hinter der Austrittsöffnung in einzelne Klümpchen zerschnitten wird.

Diese Klümpchen, die jeweils etwa 150 bis 170 mg wiegen, werden jeweils auf die Innenfläche einer metallenen Kapsel überführt, die den Körper des Kronenkorks bildet. Durch einen Formstempel wird die noch plastische Polymermasse auf dieser gegebenenfalls haftungsfördernd vorbehandelten, Innenfläche verteilt und zu einem dünnen, etwa kreisscheibenartigen Formteil ausgeprägt. Dabei können die gegebenenfalls gewünschten Ringvorsprünge des Formteils ausgebildet werden, die bei aufgesetztem Kronenkork den Flaschenrand im Mündungsbereich umgreifen.

Nach dem Abkühlen und Erstarren des thermoplastischen Polymercompounds ist das die Inneneinlage des Kronenkorkes bildende Formteil unter normalen Verwendungsbedingungen nicht mehr plastisch verformbar, kann sich aber elastisch dichtend an den Flaschenrand anlegen, wenn der Kronenkork auf die Flasche aufgepreßt wird. Aufgrund seiner Elastizität kann das Formteil dabei Unebenheiten (beispielsweise durch Beschädigungen) und auch die durch Fertigungstoleranzen bedingte Rauheit des Flaschenrandes ausgleichen.

Das Polymercompound des Formteils kann durch geeignete Wahl der zur Härtemodifikation zugesetzten Bestandteile so ausgebildet werden, daß es auch der erhöhten Temperatur standhält, die bei einer Flaschenpasteurisation auftritt.

Der so erzeugte Kronenkork ist nach Erstarren des Polymercompounds gebrauchsfertig und kann bis zu seiner Verwendung gelagert werden; die Eigenschaften des Formteils, welches seine Inneneinlage bildet, ändern sich auch über längere Zeiträume nicht.

Es versteht sich, daß außer der hier dargestellten Verwendung im Zusammenhang mit Kronenkorken auch andere Dichtungselemente für Gefäßverschlüsse erzeugt werden können, bei denen das entsprechende Formteil mit dem Verschlußkörper nicht fest verbunden ist.

## Ansprüche

1. Formteil, insbesondere Dichtungselement, für mechanisch dichtende Flaschen-und Gläserverschlüsse aus Metall oder Kunststoff, bestehend aus einem unter üblichen Verwendungsbedingungen elastisch verformbaren synthetischen halogenfreien Polymercompound, mit einem Gehalt an Styrol-Butadien-Styrol-Kautschuk (SBS-Kautschuk) und einem Gehalt an einem estergruppenfreien Härtemodifikator, wobei die Shore A-Härte des Polymercompounds zwischen 30 und 80 liegt und das Polymercompound einen Gehalt an einem aliphatischen Polymer, insbesondere Polyethylen (PE) und/oder Ethylen-Vinylacetat-Copolymerem (EVA) aufweist.

2. Formteil nach Anspruch 1, dadurch gekennzeichnet, daß der Härtemodifikator eine Mineralölfraktion, vorzugsweise ein raffiniertes, im wesentlichen paraffinisches Weißöl gemäß DAB 8 ist.

3. Formteil nach Anspruch 1 oder 2, dadurch gekennzeichnet, daß der Gehalt an nicht aus SBS bestehenden Polymersubstanzen 50 Gew.-% des Polymercompounds nicht übersteigt und vorzugsweise 5 Gew.-% nicht unterschreitet.

4. Formteil nach einem der Ansprüche 1 bis 3 dadurch gekennzeichnet, daß das Polymercompound geschäumt ist.

5. Formteil nach einem der Ansprüche 1 bis 4, dadurch gekennzeichnet, daß das Polymercom-pound Siliziumdioxid $SiO_2$ enthält.

6. Formteil nach Anspruch 5, dadurch gekennzeichnet, daß der $SiO_2$-Gehalt höchstens 5 Gew.-% und vorzugsweise weniger als 1 Gew.-%, bezogen auf das Polymercompound insgesamt, ausmacht.

7. Formteil nach einem der Ansprüche 1 bis 6, dadurch gekennzeichnet, daß seine Shore A-Härte zwischen 40 und 70 liegt.

8. Formteil nach einem der Ansprüche 1 bis 7, dadurch gekennzeichnet, daß es als im wesentli-chen kreisscheibenförmige Inneneinlage eines Kro-nenkorkes bzw. Flaschenschraubverschlusses aus-gebildet ist und zwischen 150 mg und 250 mg, vorzugsweise weniger als 200 mg wiegt.

9. Polymercompound zur Herstellung von Formteilen, insbesondere von Dichtungselementen, für Gefäßverschlüsse, das plastisch, insbesondere thermoplastisch, zu einem unter üblichen Verwendungbedingungen elastischen Formteil ausformbar ist, und ein synthetisches Polymer, einen Härtemodifikator, sowie gegebenenfalls Schäummittel und/oder Füllstoff bzw. Verarbeitungs-Hilfsmittel enthält, wobei das im wesentlichen halogenfreie Polymercompound einen Gehalt an

    a) Styrol-Butadien-Styrol-Kautschuk (SBS-Kautschuk) mit einer Shore A-Härte von zwischen 40 und 90,

    b) einem estergruppenfreien Härtemodifikator, und

    c) einem aliphatischen Polymer, insbesondere Polyethylen (PE) und/oder Ethylen-Vinylacetat-Copolymerem (EVA) aufweist und

    d) eine Shore A-Härte von zwischen 30 und 80 hat.

10. Polymercompound nach Anspruch 9, dadurch gekennzeichnet, daß der Härtemodifikator eine Mineralölfraktion, vorzugsweise ein raffiniertes, im wesentlichen paraffinisches Weißöl gemäß DAB 8 ist.

11. Polymercompound nach Anspruch 9 oder 10, dadurch gekennzeichnet, daß der Gehalt an nicht aus SBS bestehenden Polymersubstanzen 50 Gew.-% des Polymercompounds nicht übersteigt und vorzugsweise 5 Gew.-% nicht unterschreitet.

12. Polymercompound nach einem der Ansprüche 9 bis 11, gekennzeichnet durch einen Gehalt eines Schäummit tels, vorzugsweise Azodicarbonamid, von zwischen 0,05 und 3 Gew.-%, vorzugsweise von 0,1 Gew.-% und/oder einen Gehalt an hochdispersem $SiO_2$, der vorzugsweise 5 Gew.-% nicht übersteigt und insbesondere weniger als 1 Gew.-% ausmacht.

13. Gefäßverschluss, insbesondere Kronenkork bzw. Flaschenschraubverschluß, mit einer Inneneinlage aus elastischem Polymermaterial, dadurch gekennzeichnet, daß die im wesentlichen halogenfreie Inneneinlage einen Gehalt von Styrol-Butadien-Styrol-Kautschuk (SBS-Kautschuk), einen Gehalt eines estergruppenfreien Härtemodifikators und einen Gehalt eines aliphatischen Polymeren, insbesondere Polyethylen (PE) und/oder Ethylen-Vinylacetat-Copolymer (EVA), aufweist und ihre Shore A-Härte zwischen 30 und 80 liegt.

14. Gefäßverschluß nach Anspruch 13, dadurch gekennzeichnet, daß die Shore A-Härte der Inneneinlage zwischen 40 und 70 liegt und die Inneneinlage zwischen 150 mg und 250 mg, vorzugsweise weniger als 200 mg wiegt.

15. Gefäßverschluß nach Anspruch 13 oder 14, dadurch gekennzeichnet, daß der Härtemodifikator eine Mineralölfraktion, vorzugsweise ein raffiniertes, im wesentlichen paraffinisches Weißöl gemäß DAB 8 ist.

16. Gefäßverschluß nach einem der Ansprüche 13 bis 15, dadurch gekennzeichnet, daß die Inneneinlage ge - schäumt ist und/oder einen Gehalt von Siliziumdioxid aufweist.

17. Gefäßverschluß nach einem der Ansprüche 13 bis 16, dadurch gekennzeichnet, daß die Inneneinlage durch Ausformung eines Polymercompounds gemäß einem der Ansprüche 9 bis 12 auf der, gegebenenfalls haftungsfördernd behandelten, Innenfläche eines Verschlußkörpers ausgebildet ist.